# EUROPÄISCHE PATENTSCHRIFT

(11) **EP 0 486 058 B1**
(45) Veröffentlichungstag und Bekanntmachung des Hinweises auf die Patenterteilung: **23.10.1996**
(21) Anmeldenummer: 91119553.5
(22) Anmeldetag: 15.11.1991
(51) Int. Cl.: B60R 19/34

(54) **Pralldämpfer für Kraftfahrzeuge**
Shock-absorber for motor vehicles
Amontisseur de choc pour véhicules automobiles

(30) Priorität: 16.11.1990 AT 2320/90
(43) Veröffentlichungstag der Anmeldung: 20.05.1992
(73) Patentinhaber: Euromotive Gesellschaft m.b.H., 5282 Ranshofen (AT)
(72) Erfinder: Garnweidner, Peter, A-5112 Lamprechtshausen 429 a (AT)
(74) Vertreter: WILHELMS, KILIAN & PARTNER Patentanwälte

(56) Entgegenhaltungen:
- DE-A- 2 105 090
- DE-A- 2 313 927
- DE-A- 2 441 557
- DE-A- 2 460 598

## Beschreibung

Die Erfindung bezieht sich auf einen Pralldämpfer für Kraftfahrzeuge mit ineinander schiebbaren Rohren, wobei ein Innenrohr einen Bereich aufweist, der in einem Außenrohr liegt und dessen Außenkontur größer ist als die ursprüngliche Innenkontur eines benachbarten Bereichs des Außenrohres.

Diese Bauweise hat den Vorteil, daß die Umformkraft über den gesamten Verformungsweg etwa konstant bleibt und der Energieabsorber somit über seine gesamte Verformungslänge mit maximal zulässiger Kraft für die Gesamtkonstruktion verformen kann.

Bei heute üblichen Pralldämpfern werden diese meist mit einem Flansch versehen und entweder von der Außenseite des Fahrzeuges in einen dafür vorgesehenen Bauteil eingeschoben und verschraubt, oder auf einem im Wageninnenraum befindlichen Längsholm befestigt. Diese Bauweisen haben die Nachteile, daß bei der Montage des Fahrzeuges der Pralldämpfer zuerst in den Wagenaufbau eingebracht und befestigt werden muß und sodann erst die Stoßstange bzw. das Prallschild an ihm befestigt werden kann. Ein vollkommenes Vormontieren des Prallschildes oder der Stoßstange gemeinsam mit der Befestigung und den Pralldämpfern ist bei diesen Bauweisen nicht möglich. Bei den in die Karosserie eingeschobenen Varianten sind die Schrauben zur Befestigung des Pralldämpfers nicht mehr zugänglich und bei den auf den im Innenraum befindlichen, an Holmen befestigten Pralldämpfern ist ein Einbringen in die Karosserie auf diese Art nicht möglich, da die Karosserie-Durchtrittsöffnungen nicht groß genug ausgeführt sind. Diese Öffnungen können deswegen nicht so groß dimensioniert werden, da dadurch zu große Schwächungen der Fahrzeugstruktur erfolgen.

Bei den auf den Holmen montierten Ausführungen ist die Befestigung zur Trägheitshauptachse des Holmes exzentrisch, wodurch der Holm auf Biegung belastet wird und eine stärker dimensionierte Ausführung des Holmes nötig wird. Zusätzlich wird auch noch weitaus mehr Platz verbaut. Weiters müssen die auf den Fahrzeugholmen befestigten Pralldämpfer beidseitig mit Schrauben fixiert werden, um die benötigte Festigkeit der Anbringung zu erzielen. Dadurch müssen mehr Schrauben für die Befestigung eingesetzt werden.

Aus der DE-OS 24 60 598 ist ein Pralldämpfer der eingangs genannten Art bekannt, welcher über eine Montageplatte am Fahrzeugaufbau befestigt ist, die an dem dem Innenrohr abgewandte Ende des Außenrohres vorgesehen ist.

Eine ähnliche Art der Anbringung eines Pralldämpfers mit ineinanderliegenden Rohren, von denen das äußere bei einer Kollision aufgeweitet wird, ist auch aus der US-PS 3 915 486 bekannt.

Demgegenüber soll erfindungsgemäß die Anbringung des Pralldämpfers vereinfacht werden.

Dies wird erfindungsgemäß dadurch erreicht, daß das Außenrohr wenigstens zwei dieses normal zu seiner Längsachse durchsetzende Bohrungen aufweist, von denen wenigstens eine in einem Bereich vorgesehen ist, in dem Außenrohr und Innenrohr ineinander liegen, daß das Innenrohr ferner Längsschlitze aufweist, welche die wenigstens eine Bohrung überdecken und sich vom Überdeckungsbereich wenigstens nach der Seite hin erstrecken, von der aus das Innenrohr in das Außenrohr geschoben wird, und daß Schrauben vorgesehen sind, welche sich durch die Bohrungen und dort, wo eine Bohrung von den Längsschlitzen überdeckt wird, auch durch diese Längsschlitze erstrecken, und welche ferner durch Löcher führbar sind, die am Fahrzeugaufbau in Überdeckung mit den Bohrungen bringbar vorgesehen sind.

Durch diese Anordnung kann die Zahl der Verschraubungen verringert werden. Die Bauform weist keinerlei vorstehende Befestigungsösen oder Nasen auf, sodaß sie von außen durch die vorhandene Durchgangsöffnung in den Wagenbau eingeschoben werden kann. Durch die vorhandenen Bohrungen ist ein leichtes Positionieren des Pralldämpfers zur Fahrzeuglängs- und -querachse erreichbar. Die Montage kann mit bereits angebauten Stoßstangen erfolgen, da alle Verschraubungen auch nach dem einschieben der gesamten Pralldämpfer-Stoßstangeneinheit gut erreichbar sind.

Es ist besonders günstig, die Befestigung des Pralldämpfers so anzuordnen, daß er sich im Endbereich eines Längsholmes des Fahrzeugaufbaues befindet und die Schrauben durch Löcher an den Längsholmen verlaufen und daß die Schrauben im Bereich zwischen den Innenwänden des Längsholmes des Fährzeugaufbaues in Hülsen angeordnet sind.

Dadurch kann, wie bei den bekannten Versionen mit Flanschbefestigung an der Außenseite des Fahrzeuges eine zentrale Krafteinleitung über die Befestigungsschrauben in den Längsholm des Wagenaufbaues erzielt werden. Um dabei das Montieren zu vereinfachen und ein ungewolltes plastisches Verformen des Längsholmes zu vermeiden, ist um die Schraube eine Hülse angeordnet. Beim Anziehen der Schraube wird der Holm geringfügig im elastischen Bereich verformt, sodaß beide Enden der Hülse an den Innenwänden des Holmes im Bereich um die Löcher des Holmes anstehen. Die Hülsen werden dabei schon in den Pralldämpfern vormontiert und mit diesen gemeinsam in den Längsholm eingebracht.

Es ist weiters vorteilhaft, daß der Überdeckungsbereich von Bohrung und Längsschlitzen an den am weitesten im Außenrohr befindlichen Enden der Längsschlitze liegt. Dadurch wird die Verformung des Pralldämpfers nicht durch die Schrauben behindert.

Weiters ist es günstig, das Innenrohr so auszuführen, daß das Innenrohr anschließend an seinen Bereich mit der größeren Außenkontur einen Bereich aufweist, dessen Außenkontur der ursprünglichen Innenkontur des Außenrohres entspricht.

Dadurch wird eine definierte Reibfläche zwischen den beiden Rohren erzielt, die sich während des Verformungsvorganges nicht ändert.

Es ist weiters vorteilhaft, daß die Längserstreckung der Längsschlitze größer als der Abstand zwischen der mit diesen in Überdeckung befindlichen Bohrung und der zu ihr benachbarten ist.

Dadurch kommt es am Ende des Deformationsweges nicht zur Beschädigung der im Längsschlitz befindlichen Schraube und die Krafteinleitung bei weiterer Kollisionseinwirkung erfolgt durch beide Befestigungsschrauben.

Zum Zwecke der einfacheren Montage ist es günstig, daß eine jeweils zur Fixierung einer Schraube nötige Mutter als an der Außenseite des Längsholmes des Fahrzeugaufbaues geordnete Anschweißmutter ausgeführt ist.

Aus Gründen der Gewichtseinsparung ist es weiters erfindungsgemäß vorteilhaft, daß die ineinander schiebbaren Rohre aus Leichtmetall, insbesondere Aluminiumlegierung, bestehen.

Um eine besonders einfache Montage zu ermöglichen, ist es vorteilhaft daß die Schrauben mit vertikaler Längsachse im Fahrzeugaufbau angeordnet sind.

Um das Eindringen von Verschmutzungen im Fahrzeugbau im Bereich des Längsholmes zu vermeiden, ist es erfindungsgemäß günstig, daß im Bereich des Endes des den Pralldämpfer aufnehmenden Längsholmes eine Dichtung zwischen Längsholm und dem aus diesem ragenden Innenrohr angeordnet ist.

Die Erfindung wird anhand der nachstehenden Zeichnungen beschrieben. Es zeigen:

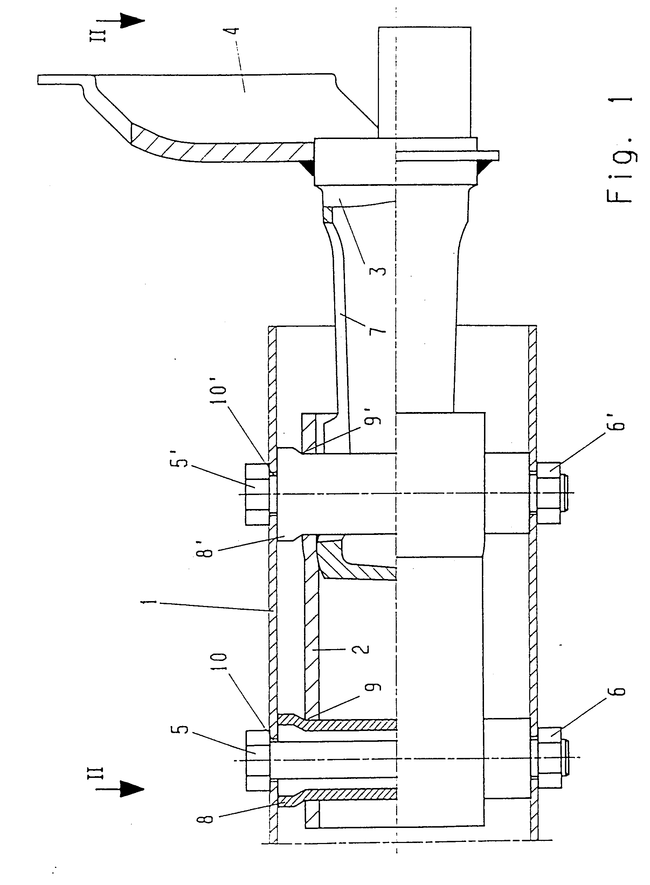

- Fig. 1: einen Längsschnitt durch einen Fahrzeuglängsholm mit eingebauten, erfindungsgemäßen Pralldämpfern.

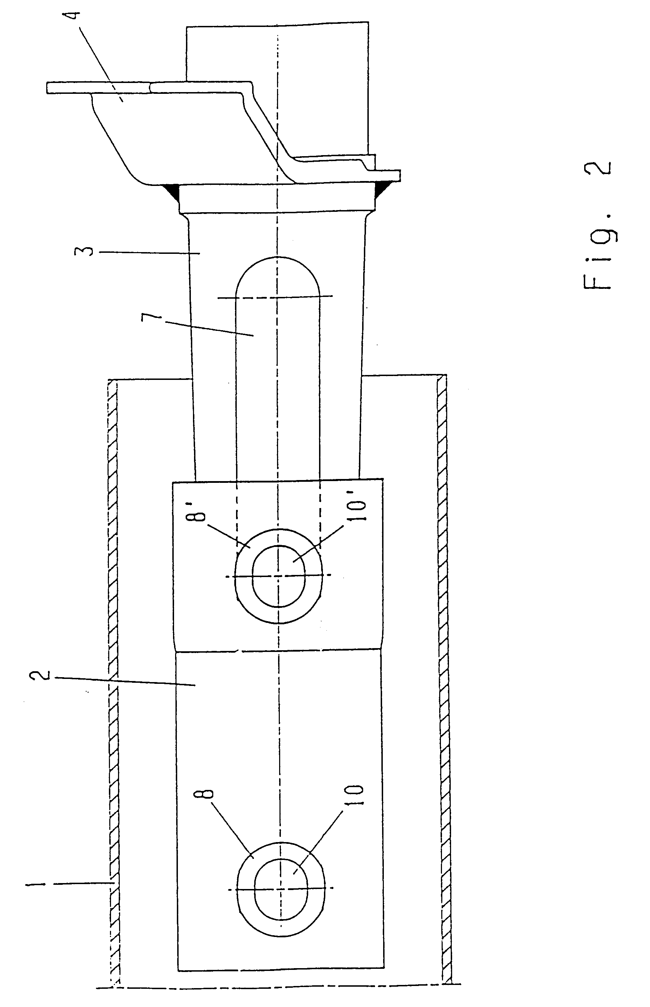

- Fig. 2: eine Draufsicht längs II-II in Fig. 1.

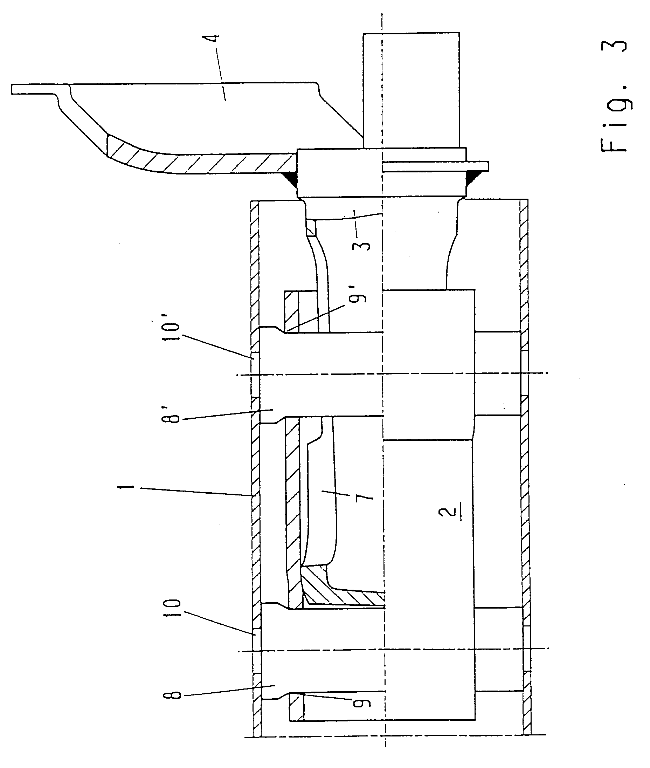

- Fig. 3: einen Längsschnitt wie Fig. 1, jedoch nach einem Kollisionsvorgang.

Im Längsholm 1 ist der Pralldämpfer angeordnet, der aus dem Außenrohr 2 und dem Innenrohr 3 besteht. Das Innenrohr 3 reicht aus dem Wagenaufbau heraus und besitzt eine Aufnahme 4 für den nicht dargestellten Stoßfänger. Der Pralldämpfer ist durch die Schrauben 5, 5' und die Muttern 6, 6' am Längsholm 1 befestigt, wobei er durch die Bohrungen (10, 10') am Längsholm 1 und die Querbohrungen (9, 9') am Außenrohr 2 verläuft. Das Innenrohr 3 weist einander überdeckende Längsschlitze 7 auf, welche die näher zur Abschlußseite des Längsholmes 1 befindlichen Querbohrung 9 des Außenrohres 2 überdeckend angeordnet sind. Um eine leichtere Montage zu ermöglichen, sind um die Schrauben 5 Hülsen 8 angeordnet. Dadurch kann die Verschraubung nicht so fest angezogen werden, daß der Längsholm 1 eingedrückt wird. Somit ist es nicht notwendig, eine zusätzliche Versteifung oder Schott im Längsholm 1 anzubringen. In den ineinanderliegenden Bereichen des Außenrohres 2 und des Innenrohres 3, weist das Innenrohr 3 eine größere Außenkontur auf, als die ursprüngliche Innenkontur des Außenrohres 2 ist. In dem angrenzenden Bereich ist aber die Außenkontur des Innenrohres 3 wieder auf die Innenkontur des Außenrohres 2 reduziert oder sogar etwas geringer, wodurch die Reibfläche zwischen den Rohren gleich bleibt. Bei einer Kollision wird das Innenrohr 3 in das Außenrohr 2 geschoben und weitet dieses dabei auf. Durch die Längsschlitze 7 ist das Innenrohr 3 zusätzlich gegen Verdrehen während des Deformationsvorganges gesichert. Am Ende des Kollisionsvorganges ist das innenliegende Ende des Innenrohres 3 an der Schraube 5 anstehend. Um einen möglichst großen Verformungsweg zu erzielen, sind die Längsschlitze 7 länger als der Abstand zwischen den beiden Verschraubungen, sodaß nach dem Kollisionsvorgang das Ende des Längsschlitzes 7 noch nicht an der Schraube 5' anliegt.

## Patentansprüche

1. Pralldämpfer für Kraftfahrzeuge mit ineinander schiebbaren Rohren, wobei ein Innenrohr (3) einen Bereich aufweist, der in einem Außenrohr (2) liegt und dessen Außenkontur größer ist als die ursprüngliche Innenkontur eines benachbarten Bereichs des Außenrohres (2), dadurch gekennzeichnet, daß das Außenrohr (2) wenigstens zwei dieses normal zu seiner Längsachse durchsetzende Bohrungen (9, 9') aufweist, von denen wenigstens eine (9') in einem Bereich vorgesehen ist, in dem Außenrohr (2) und Innenrohr (3) ineinander liegen, daß das Innenrohr (3) ferner Längsschlitze (7) aufweist, welche die wenigstens eine Bohrung (9') überdecken und sich vom Überdeckungsbereich wenigstens nach der Seite hin erstrecken, von der aus das Innenrohr (3) in das Außenrohr (2) geschoben wird, und daß Schrauben (5, 5') vorgesehen sind, welche sich durch die Bohrungen (9, 9') und dort, wo eine Bohrung (9') von den Längsschlitzen (7) überdeckt wird, auch durch diese Längsschlitze (7) erstrecken, und welche ferner durch Löcher (10, 10') führbar sind, die am Fahrzeugaufbau in Überdeckung mit den Bohrungen (9, 9') bringbar vorgesehen sind.

2. Pralldämpfer nach Anspruch 1, dadurch gekennzeichnet, daß er sich im Endbereich eines Längsholmes (1) des Fahrzeugaufbaues befindet und die Schrauben (5, 5') durch Löcher (10, 10') in den Längsholmen (1) verlaufen, und daß die Schrauben (5, 5') im Bereich zwischen den Innenwänden des Längsholmes (1) des Fahrzeugaufbaues in Hülsen (8) angeordnet sind.

3. Pralldämpfer nach Anspruch 1 oder 2, dadurch gekennzeichnet, daß der Überdeckungsbereich von Bohrung (9') und Längsschlitzen (7) an dem am weitesten im Außenrohr (2) befindlichen Ende des Längsschlitzes (7) liegt.

4. Pralldämpfer nach Anspruch 1, dadurch gekennzeichnet, daß das Innenrohr (3) anschließend an seinen Bereich mit der größeren Außenkontur einen Bereich aufweist, dessen Außenkontur der ursprünglichen Innenkontur des Außenrohres (2) entspricht.

5. Pralldämpfer nach einem der Ansprüche 1-4, dadurch gekennzeichnet, daß die Längserstreckung der Längsschlitze größer als der Abstand zwischen der mit diesen in Überdeckung befindlichen Bohrung (9') und der zu ihr benachbarten Bohrung (9) ist.

6. Pralldämpfer nach einem der Ansprüche 2-5, dadurch gekennzeichnet, daß eine jeweils zur Fixierung einer Schraube (65, 5') nötige Mutter (6, 6') als an der Außenseite des Längsholmes (1) des Fahrzeugaufbaues angeordnete Anschweißmutter ausgeführt ist.

7. Pralldämpfer nach einem der Ansprüche 1-6, dadurch gekennzeichnet, daß die ineinander schiebbaren Rohre aus Leichtmetall, insbesondere Aluminiumlegierung, bestehen.

8. Pralldämpfer nach einem der Ansprüche 1-7, dadurch gekennzeichnet, daß die Schrauben (5, 5') mit vertikaler Längsachse im Fahrzeugaufbau angeordnet sind.

9. Pralldämpfer nach einem der Ansprüche 2-8, dadurch gekennzeichnet, daß im Bereich des Endes des den Pralldämpfer aufnehmenden Längsholmes (1) eine Dichtung zwischen Längsholm (1) und dem aus diesem ragenden Innenrohr (3) angeordnet ist.

## Claims

1. An impact damper for motor vehicles, comprising tubes which are displaceable one within the other, wherein an inner tube (3) has a region which is disposed in an outer tube (2) and whose outside contour is larger than the original inside contour of an adjacent region of the outer tube (2), characterised in that the outer tube (2) has at least two bores (9, 9') which pass through it normal to its longitudinal axis and of which at least one (9') is provided in a region in which the outer tube (2) and the inner tube (3) are one within the other, that the inner tube (3) also has longitudinal slots (7) which overlap the at least one bore (9') and which extend from the overlap region at least towards the side from which the inner tube (3) is pushed into the outer tube (2), and that there are provided screws (5, 5') which extend through the bores (9, 9') and, where a bore (9') is overlapped by the longitudinal slots (7), also through said longitudinal slots (7), and which can also be passed through holes (10, 10') which are provided on the vehicle structure alignably with the bores (9, 9').

2. An impact damper according to claim 1 characterised in that it is disposed in the end region of a longitudinal frame member (1) of the vehicle structure and the screws (5, 5') extend through holes (10, 10') in the longitudinal frame members (1), and that the screws (5, 5') are arranged in sleeves (8) in the region between the inside walls of the longitudinal frame member (1) of the vehicle structure.

3. An impact dapper according to claim 1 or claim 2 characterised in that the overlap region of the bore (9') and the longitudinal slots (7) is at the end of the longitudinal slot (7), which is furthest in the outer tube (2).

4. An impact damper according to claim 1 characterised in that adjoining its region with the larger outside contour the inner tube (3) has a region whose outside contour corresponds to the original inside contour of the outer tube (2).

5. An impact dapper according to one of claims 1 to 4 characterised in that the longitudinal extent of the longitudinal slots is greater than the spacing between the bore (9') which is in overlapping relationship therewith, and the bore (9) adjacent thereto.

6. An impact damper according to one of claims 2 to 5 characterised in that a respective nut (6, 6') which is required for fixing a screw (5, 5') is in the form of a welded-on nut arranged on the outside of the longitudinal frame member (1) of the vehicle structure.

7. An impact damper according to one of claims 1 to 6 characterised in that the tubes which are displaceable one within the other comprise light metal, in particular aluminium alloy.

8. An impact damper according to one of claims 1 to 7 characterised in that the screws (5, 5') are arranged with their longitudinal axis vertical in the vehicle structure.

9. An impact damper according to one of claims 2 to 8 characterised in that in the region of the end of the longitudinal frame member (1) which accommodates the impact damper a seal is arranged between the longitudinal frame member (1) and the inner tube (3) which projects therefrom.

## Revendications

1. Amortisseur de chocs pour véhicules automobiles comprenant des tubes pouvant coulisser les uns dans les autres, dans lequel un tube intérieur (3) présente une zone qui est disposée dans un tube extérieur (2) et dont le contour extérieur est plus grand que le contour intérieur initial d'une zone contiguë du tube extérieur (2), caractérisé en ce que le tube extérieur (2) comporte au moins deux perçages (9, 9') traversant ce tube extérieur perpendiculairement par rapport à son axe longitudinal, perçages dont au moins un (9') est prévu dans une zone dans laquelle le tube extérieur (2) et le tube intérieur (3) sont disposés l'un dans l'autre, en ce que le tube intérieur (3) présente en outre des fentes (7) longitudinales recouvrant ledit au moins un percage (9') et s'étendant de la zone de recouvrement du moins vers le côté à partir de laquelle le tube intérieur (3) est introduit dans le tube extérieur (2), et en ce que des vis (5, 5') sont prévues qui s'étendent à travers les perçages (9, 9') et qui s'étendent à l'endroit où un perçage (9') est recouvert par les fentes (7) longitudinales, également à travers ces fentes (7) longitudinales, et qui, par ailleurs, peuvent être guidées à travers des trous (10, 10') prévus sur le châssis du véhicule de manière à pouvoir recouvrir les perçages (9, 9').

2. Amortisseur de chocs selon la revendication 1, caractérisé en ce qu'il se trouve dans la zone d'extrémité d'un longeron (1) du châssis de véhicule et en ce que les vis (5, 5') s'étendent à travers des trous (10, 10') réalisée dans les longerons (1), et en ce que les vis (5, 5') sont agencées dans la zone située entre les parois intérieures du longeron (1) du châssis de véhicule dans des manchons (8).

3. Amortisseur de chocs selon la revendication 1 ou 2, caractérisé en ce que la zone de recouvrement du perçage (9') et des fentes (7) longitudinales se trouvent à l'extrémité de la fente (7) longitudinale disposée au plus loin dans le tube extérieur (2).

4. Amortisseur de chocs selon la revendication 1, caractérisé en ce que le tube intérieur (3) présente une zone se raccordant à sa zone comportant le contour extérieur plus grand et dont le contour extérieur correspond au contour intérieur initial du tube (2) extérieur.

5. Amortisseur de chocs selon l'une quelconque des revendications 1 à 4, caractérisé en ce que l'étendue longitudinale des fentes longitudinales est plus grande que la distance entre le perçage (9') se trouvant recouvert celle-ci et le perçage (9) voisin au perçage (9').

6. Amortisseur de chocs selon l'une quelconque des revendications 2 à 5, caractérisé en ce qu'un écrou (6, 6') nécessaire pour effectuer la fixation d'une vis (5, 5'), est réalisé sous la forme d'un écrou soudé sur la face extérieure du longeron (1) du châssis de véhicule.

7. Dispositif selon l'une quelconque des revendications 1 à 6, caractérisé en ce que les tubes pouvant être coulissés les uns dans les autres, sont réalisés en métal léger, notamment en un alliage d'aluminium.

8. Amortisseur de chocs selon l'une quelconque des revendications 1 à 7, caractérisé en ce que les vis (5, 5') sont disposées avec un axe longitudinal vertical dans le châssis de véhicule.

9. Amortisseur de chocs selon l'une quelconque des revendications 2 à 8, caractérisé en ce que dans la zone d'extrémité du longeron (1) recevant l'amortisseur de chocs, un joint d'étanchéité est disposé entre le longeron (1) et le tube intérieur (3) faisant saillie du longeron.
